# EUROPEAN PATENT APPLICATION

(11) **EP 2 290 557 A2**
(43) Date of publication of application: **02.03.2011**
(21) Application number: 10173963.9
(22) Date of filing: 25.08.2010
(51) Int. Cl.: G06F 17/30

(54) **A method and system for retrieving a resource**

(30) Priority: 01.09.2009 GB 0915151
(71) Applicant: Clearswift Limited, Reading, Berkshire RG7 4SA (GB)
(72) Inventor: Hockey, Alyn, Reading, Berkshire RG7 4SA (GB)
(74) Representative: O'Connell, David Christopher

(57) **Abstract**

A method for retrieving a resource such as a data file includes determining an email address of a user requesting the retrieval, and checking whether a characteristic condition associated with said resource is satisfied. If the characteristic condition is not satisfied, for example if the size of the resource exceeds a threshold, a message is returned to the user indicating that said request for retrieval of said resource has been received, and the request is placed in a queue. The queue is processed on the basis of a rule, and the resource retrieved when said queue has been sufficiently processed, when the user can be notified by means of the email address that the resource has been retrieved. Also disclosed is a similar process for uploading data files in response to a request.

## Description

### Field of the invention

The present invention relates to a method and system for use in a computer system, for retrieving a resource such as a data file.

### Background of the invention

Many computer networks include a proxy server, which acts as an intermediate server between end user devices and remote servers. An end user device connects to a proxy server when requesting a resource which is available from a remote server. The resource may be, for example, a data file, connection, web page, or any other resource. When the proxy server receives a request for a resource from an end user device, the proxy server connects to the relevant server and sends a Uniform Resource Locator (URL) request for the resource on behalf of the end user device.

Proxy servers commonly cache the resources that are being accessed and may also block access to certain pre-determined resources and scan the content that is being downloaded from resources to determine if the content is unwanted for a variety of reasons. In many cases, the network (and any firewall of the network) is set up such that the only way to obtain access to resources is via the proxy server.

A further use of a proxy server is to deliver a local copy of a resource that has previously been retrieved and cached at the proxy server (possibly in response to a request by another end user of the proxy system). This saves bandwidth, although the server from which the resource was originally retrieved must indicate for how long the resource can be cached locally at the proxy server.

When a link to the internet is being shared by a number of users, one user can effectively take over all available bandwidth by, for example, requesting the download of a large file. This means that other traffic will be disrupted (for example, slowed down) whilst the download takes place. This disruption in traffic could be time-critical, for example, in Voice over IP (VoIP).

There is therefore a need for an improved mechanism for retrieving resources in a shared environment.

### Summary of the invention

The invention seeks to provide an improved method and system for retrieving a resource.

According to a first aspect of the present invention, there is provided a method for retrieving a resource, the method comprising the steps of:
receiving from a user a request for retrieval of a resource;
determining an email address of the user; and
checking whether a characteristic condition associated with said resource is satisfied;
the method further comprising the step, if said characteristic condition is satisfied, of retrieving said resource; and
the method further comprising the steps, if said characteristic condition is not satisfied, of:
   returning a message indicating that said request for retrieval of said resource has been received;
   determining whether a request for retrieval of said resource is already in a queue for retrieval;
   if a request for retrieval of said resource is not already in a queue for retrieval, placing a request in said queue together with said email address; and
   if a request for retrieval of said resource is already in said queue for retrieval, associating said email address with the request for retrieval of said resource already in said queue for retrieval;
   and the method further comprising the steps of:
processing said queue on the basis of a rule;
retrieving said resource when said queue has been sufficiently processed; and
notifying the user by means of the email address that the resource has been retrieved.

According to a second aspect of the invention, there is provided a method for uploading a data file, the method comprising the steps of:
receiving from a user a request for a data file to be uploaded;
determining an email address of the user; and
checking whether a characteristic condition associated with said data file is satisfied;
the method further comprising the step, if said characteristic condition is satisfied, of uploading said data file; and
the method further comprising the steps, if said characteristic condition is not satisfied, of:
   returning a message indicating that said request for uploading of said data file has been received;
   placing said request in a queue together with said email address;
   processing said queue on the basis of a rule;
   uploading said data file when said queue has been sufficiently processed; and
   notifying the user by means of the email address that the data file has been uploaded.

According to further aspects of the invention, there are provided a computer program product, comprising computer-readable instructions for causing a proxy server to perform the method according to the invention, and a proxy server, suitable for use in a computer system that further comprises a plurality of user computers, the proxy server being configured to perform the method according to the invention.

### Brief description of the drawings

For a better understanding of the invention, and to show more clearly how it may be carried into effect, reference will now be made, by way of example only, to the accompanying drawings in which:
Figure 1 is a simplified schematic of a system according to the present invention;
Figure 2 is a simplified schematic of an end user device according to the present invention;
Figure 3 is a simplified schematic of a proxy server according to the present invention; and
Figure 4 is a flow chart illustrating a method in accordance with the present invention.

### Detailed description

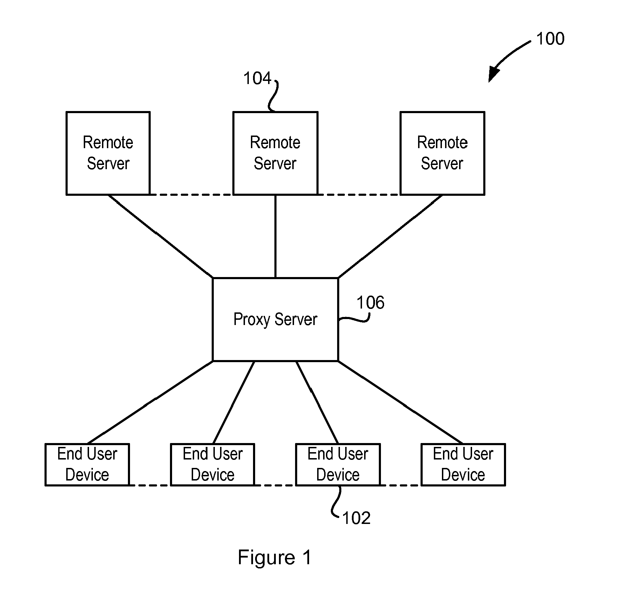

With reference to Figure 1, the system 100 comprises a plurality of end user devices 102 connected to a plurality of remote servers 104 via a proxy server 106. The proxy server 106 is similar to conventional proxy servers such as Squid, with modifications as described further herein to allow it to place remote URLs that reference certain file name extensions into a queue. The end user devices 102 may each, for example, be a personal computer (PC). The system 100 is set up so that when a user of an end user device 102 wishes to access any resource (e.g. a file) from the internet using a browser, this can only be satisfied via the proxy server 106.

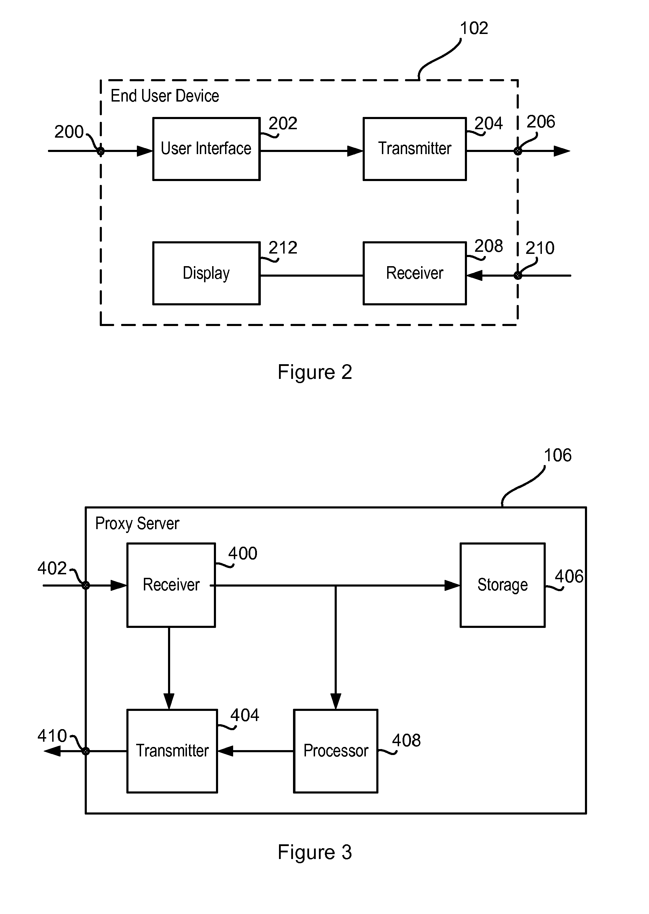

An example of an end user device 102 is shown in Figure 2. With reference to Figure 2, the end user device 102 comprises a user interface 202 for receiving a user input via an input terminal 200. The user interface 202 is connected to a transmitter 204 which transmits user requests via an output terminal 206. The end user device 102 also comprises a receiver 208, which receives data via an input terminal 210 of the end user device 102. The receiver 208 of the end user device 102 is connected to a display 212.

An example of a proxy server 106 is shown in Figure 3. With reference to Figure 3, the proxy server 106 comprises a receiver 400 for receiving requests from an end user device 102 via an input terminal 402. The receiver 400 is connected to a storage means 406 and to a processor 408. The processor 408 and the receiver 400 are connected to a transmitter 404 for transmitting data via an output terminal 410.

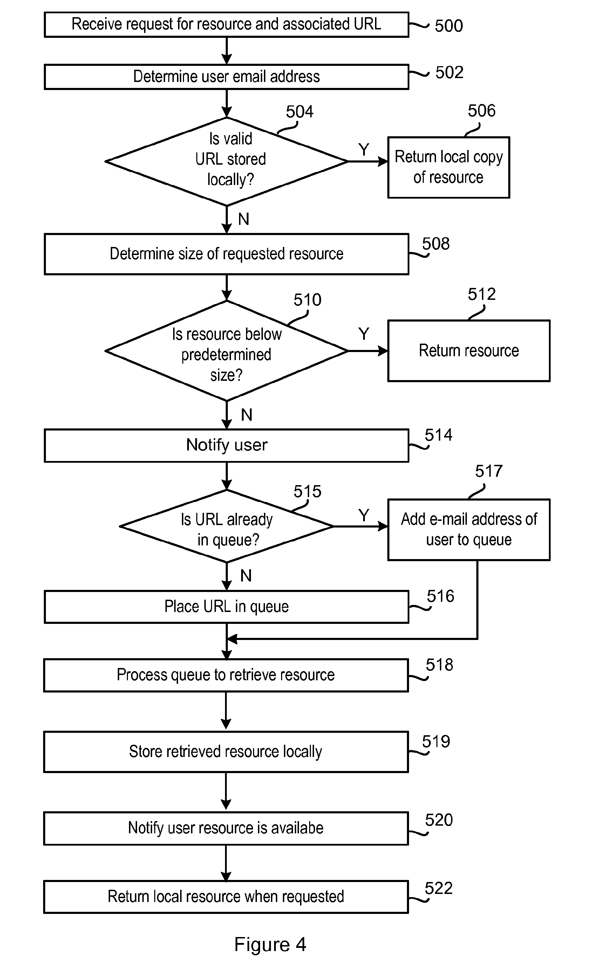

The method of the present invention will now be described with reference to the flow chart of Figure 4.

A user inputs a request for a resource via the user interface 202 and the transmitter 204 transmits the request via the output terminal 206 to the proxy server 106.

In step 500 of the process shown in Figure 4, the proxy server 106 receives at the receiver 400 via the input terminal 402 the request for a resource from the end user device 102. The resource may be, for example, a data file, connection, web page, or any other resource. The resource has an associated Uniform Resource Locator (URL) or web address, which indicates the location from which the resource is available, and the mechanism for retrieving the resource from that location. For example, the request may be for retrieving data from a website, but any request for retrieving any resource can be handled in this way.

Before the proxy server 106 processes the received request, the transmitter 404 of the proxy server 106 sends a request for the user's email address to the end user device 102 (step 502). The receiver 208 of the end user device 102 receives the request via the input terminal 210 and the display 212 of the end user device 102 displays a page requesting that the user provide their email address. The user can enter their email address via the user interface 202 of the end user device 102. Alternatively, the proxy server 106 could be configured to require a username and password from the user of the end user device 102, where the username is in fact the email address of the user.

The transmitter 204 of the end user device 102 transmits the entered e-mail address to the proxy server 106. The receiver 400 of the proxy server 106 receives the e-mail address via the input terminal 402 and inputs the e-mail address into the storage means 406. The storage means 406 retains the e-mail address using a cookie so that it is available during a web browsing session, and need only be re-acquired at the start of a further session. Thus, once the proxy server 106 has determined the email address of the user, it may continue to use the email address for future requests until the current session ends.

In some embodiments of the invention, the email address can also be stored, such that it can be used in future sessions in which the user connects to the proxy server. In other embodiments of the invention, the proxy server can be preconfigured with stored information relating to the email address of each user.

In any case, the proxy server determines the email address of the user when the request for the resource is received.

Once the e-mail address has been received at the proxy server 106, the processor 408 of the proxy server 106 checks to see if the URL of the requested resource is already cached locally at the storage means 406 of the proxy server 106 (step 504). If the processor 408 finds that the URL is cached locally at the storage means 406 of the server 106, the processor 408 checks whether the cached URL is valid. For example, when a URL is cached, the server from which the URL originates indicates a length of time for which the URL can be cached locally at the proxy server 106. If this length of time has expired, the cached URL would no longer be valid. In this case, the processor 408 deletes the invalid cached URL from the storage means 406.

If, on the other hand, the processor 408 determines that the cached URL is valid, the processor 408 extracts a local copy of the resource using the URL cached in the storage means 406 and inputs the local copy of the resource into the transmitter 404 of the server 106. The transmitter 404 then returns the local copy of the resource to the end user device 102 via the output terminal 410 (step 506).

If the processor 408 finds that the URL is not validly cached locally at the storage means 406 of the proxy server 106, the processor 408 will need to extract the resource associated with the URL from a remote server 104. Before extracting the remote copy of the resource, the processor 408 of the proxy server 106 determines whether a characteristic condition associated with the resource is satisfied. For example, in this illustrated embodiment where the resource is a data file, the proxy server determines the size of the file associated with the URL (step 508). In some embodiments of the invention, the proxy server may be able to determine the actual size of the data file. However, in this illustrated embodiment, the processor 408 does not accurately determine the actual size of the data file, but instead determines whether the resource is likely to relate to a large data file by detecting the file extension. For example, commonly .exe files are programs, .zip and .gz files are compressed files, .iso files are CD images, .mov, .avi, .mpg files and so on are videos. The actual file extensions to be checked are part of the configuration of the proxy server 106.

If the processor 408 of the proxy server 106 determines based on the file extension that the file relating to the URL is likely to be below a predetermined size (step 510), the processor 408 of the proxy server 106 accesses the remote URL and retrieves the file (step 512).

If, on the other hand, the processor 408 of the proxy server 106 determines that the file relating to the URL is potentially large, then the processor 408 replaces the remote URL by an alternative local URL that indicates that the download has been requested. The processor 408 inputs the replaced local URL into the transmitter 404, which transmits the replaced local URL to the end user device 102 via the output terminal 408 of the proxy server 106. The receiver 208 of the end user device 102 receives the local URL via the input terminal 210 of the end user device 102 and inputs the received local URL into the display 212 of the end user device 206 for display to a user. When a user activates the displayed URL via the user interface 202, the URL indicates to the user that the download has been requested and may also contain details about what has happened (step 514).

In addition, if the processor 408 of the proxy server 106 has determined in step 510 based on the file extension that the file relating to the URL is potentially large, the processor 408 of the proxy server 106 checks to see if the remote URL is already in a request queue. This may be the case if the resource associated with the remote URL has already been requested by another user.

If the processor 408 finds in step 515 that the remote URL is not already in the queue, then, in step 516, the processor 408 places the remote URL in the request queue along with a note of the email address of the user making the request.

If the processor 408 finds in step 515 that the remote URL is already in the queue, the process passes to step 517, in which the processor 408 stores the email address of the user in association with the remote URL that is already in the queue, together with the email address that was stored with the remote URL when it was first added to the queue.

As described above, the processor 408 determines the size of the requested resource before starting to retrieve it, and then either retrieves the resource or queues it, based on an assessment of the size of the resource. In an alternative embodiment, the processor 408 of the proxy server 106 opens the URL and begins downloading the resource (e.g. a file) associated with the remote URL from the remote server 104. At the same time, the processor 408 of the proxy server 106 notes the size of the file to be downloaded and compares this with a predetermined maximum size. If the processor 408 determines that the size of the file is less than a predetermined maximum size, then the processor 408 continues to download the file from the remote server 104. If, on the other hand, the processor 408 determines that the size of the file is equal to or more than a predetermined maximum size, then the processor 408 cancels the download and places the remote URL in a queue, in the same manner as described with reference to steps 515, 516 and 517.

In step 518, the processor 408 of the proxy server 106 processes the queue. Generally, this proceeds starting with downloading the file that is associated with the URL that is first in the queue and then moves to downloading the file that is associated with the URL that is next in the queue and so on.

Alternatively, the processor 408 of the proxy server 106 processes the queue according to a set of rules, which can be set by an administrator. These rules can be different for different users, as identified by their email addresses. In one embodiment, the processor 408 will only allow downloads to take place at certain times, for example, overnight. In another embodiment, the processor 408 will only process one download at a time.

In another embodiment, the proxy server 106 will restrict the amount of bandwidth that it uses. Commonly TCP/IP is the protocol used to transfer data. In this protocol, when a remote server 104 sends data to the proxy server 106, the remote server 104 expects an acknowledgment from the proxy server 106. If the proxy server 106 delays sending the acknowledgement to the remote server 104, the remote server 104 is forced to pause and does not send any new data to the proxy server 106, thus reducing bandwidth requirement. By choosing suitable delays for sending acknowledgements, bandwidth consumption can be tuned.

Also, the processor 408 can process the queue in such a way as to limit the number of concurrent transfers.

Once the processor 408 of the proxy server 106 has completed a download of a file associated with a URL in the queue, the processor 408 of the proxy server 106 transfers the file into the storage means 406 of the proxy server 106. The storage means 406 of the proxy server 106 saves the file in case any other users request the file in the future (step 519). The means that a user requesting the file in the future can obtain the file more quickly since the file would be stored locally at the storage means 406 of the proxy server 106.

The processor 408 of the proxy server 106 also inputs the downloaded file into the transmitter 404 of the proxy server 106. The transmitter 404 of the proxy server 106 then sends an email to the email address of the user who originally requested the download, causing it to be added to the queue in step 516, and to any email address that was added to the original URL in the queue in step 517. The email may include the downloaded file, for example, as an attachment. Alternatively, the body of the email may include the original remote URL and may also include a message indicating that the file is now available (step 520). The user can then request retrieval of the file from the storage means 406 of the proxy server 106 at a convenient time by clicking on the URL via the user interface 202 of the end user device 102.

The user interface 202 inputs the request into the transmitter 204 of the end user device 102, which transmits the request via the output terminal 206 to the proxy server 106. The receiver 400 of the proxy server 106 receives the request from the end user device 102 via the input terminal 402 and inputs the request into the processor 408. The processor 408 retrieves the relevant file from the storage means 406 and inputs the retrieved file into the transmitter 404 of the proxy server 106. The transmitter 404 of the proxy server 106 transmits the retrieved file via the output terminal 410 to the end user device 102 (step 522). The receiver 208 of the end user device 102 receives the retrieved file via the input terminal 210 and inputs the retrieved file into the display 212 of the end user device 102. The display 212 displays the retrieved file to the user. In this way, the user is sent the local copy of the file from the storage means 406 of the proxy server 106. Once the transfer has been completed, the local copy of the file may be deleted and the user sent a confirmation e-mail.

In other embodiments, an exactly similar process can be used in the case of a request for uploading a data file. In that case, the proxy server 106 is additionally configured to identify data being uploaded to a URL via the POST http request. The POST http request includes the size of the POST data. The processor 408 of the proxy server 106 notes POST http requests that are received from end user devices 102 and also notes the size of the POST data. If the size of the POST data is less than a predetermined maximum then the upload is permitted, otherwise the processor 408 writes the upload data to a temporary local file of the storage means 406 of the proxy server, instead of sending the data to the remote URL. The processor 408 of the proxy server 106 then places the URL, the location of the temporary file and the email address of the user in a file transfer queue (as previously described). Once the processor 408 of the proxy server 106 has completed the upload, the local file copy is deleted and the user is notified by email that the upload has been completed.

## Claims

1. A method for retrieving a resource, the method comprising the steps of:
receiving from a user a request for retrieval of a resource;
determining an email address of the user; and
checking whether a characteristic condition associated with said resource is satisfied;
the method further comprising the step, if said characteristic condition is satisfied, of retrieving said resource; and
the method further comprising the steps, if said characteristic condition is not satisfied, of:
returning a message indicating that said request for retrieval of said resource has been received;
determining whether a request for retrieval of said resource is already in a queue for retrieval;
if a request for retrieval of said resource is not already in a queue for retrieval, placing a request in said queue together with said email address; and
if a request for retrieval of said resource is already in said queue for retrieval, associating said email address with the request for retrieval of said resource already in said queue for retrieval;
and the method further comprising the steps of:
processing said queue on the basis of a rule;
retrieving said resource when said queue has been sufficiently processed; and
notifying the user by means of the email address that the resource has been retrieved.

2. The method according to claim 1, wherein the resource comprises a data file.

3. The method according to claim 2, wherein the step of checking whether a characteristic condition associated with said data file is satisfied comprises checking whether said data file is below a predetermined size.

4. A method as claimed in claim 3, comprising checking whether the file is below a determined size comprises determining a likely size of the file based on a file extension of the file.

5. The method according to any one of the preceding claims, further comprising the step of saving said retrieved resource locally.

6. The method according to claim 5, further comprising, before checking whether a characteristic condition associated with said resource is satisfied, checking whether said resource is stored locally, and, if it is determined that the resource is stored locally, returning a local copy of the resource.

7. The method according to any one of the preceding claims, comprising determining the email address of the user by sending to the user, in response to receiving said request for retrieval of a resource, a request for the email address of said user.

8. The method according to any preceding claim, wherein said queue is processed on the basis of a rule relating to the user from which said request was received, the length of time to retrieve said resource, or the bandwidth used to retrieve said resource.

9. The method according to any of the preceding claims, wherein only one resource in said queue is retrieved at one time.

10. The method according to any of the preceding claims, wherein resources in said queue are only retrieved at certain times.

11. The method according to any of the preceding claims, wherein the step of notifying the user comprises sending to said user a message indicating a local address for retrieval of said data file.

12. A method for uploading a data file, the method comprising the steps of:
receiving from a user a request for a data file to be uploaded;
determining an email address of the user; and
checking whether a characteristic condition associated with said data file is satisfied;
the method further comprising the step, if said characteristic condition is satisfied, of uploading said data file; and
the method further comprising the steps, if said characteristic condition is not satisfied, of:
returning a message indicating that said request for uploading of said data file has been received;
placing said request in a queue together with said email address;
processing said queue on the basis of a rule;
uploading said data file when said queue has been sufficiently processed; and
notifying the user by means of the email address that the data file has been uploaded.

13. The method according to claim 12, wherein the step of checking whether a characteristic condition associated with said data file is satisfied comprises checking whether said data file is below a predetermined size.

14. The method according to claim 11 or 12, comprising determining the email address of the user by sending to the user, in response to receiving said request for uploading of the data file, a request for the email address of said user.

15. The method according to any of claims 11 to 13, wherein said queue is processed on the basis of a rule relating to the user from which said request was received, the length of time to upload said data file, or the bandwidth used to upload said data file.

16. The method according to any of claims 11 to 14, wherein data files in said queue are only uploaded at certain times.

17. A computer program product, comprising computer-readable instructions for causing a proxy server to perform the method according to any preceding claim.

18. A proxy server, suitable for use in a computer system, further comprising a plurality of user computers, the proxy server being configured to perform the method as defined in any of claims 1 to 16.
